# EUROPEAN PATENT APPLICATION

(11) **EP 1 396 865 A1**
(43) Date of publication of application: **10.03.2004**
(21) Application number: 02019663.0
(22) Date of filing: 03.09.2002
(51) Int. Cl.: H01B 3/44, H01B 3/46, C09K 21/14, C08K 3/22, C08K 3/26

(54) **Flame retardant polymer composition**

(71) Applicant: Borealis Technology Oy, 06101 Porvoo (FI)
(72) Inventor: Urban Andreasson, SE 444 96 Odsmal (SE); Ola Fagrell, SE 444 42 Stenungsund (SE); Bernt-Ake Sultan, SE 444 42 Stenungsund (SE)
(74) Representative: Kador, Ulrich, Dr.

(57) **Abstract**

The present invention provides a flame retardant polymer composition which is free of halogen compounds and which comprises
(A) an organic polymer matrix,
(B) optionally a silicone-group containing compound,
(C) an inorganic filler material which is neither a hydroxide nor a hydrated compound, and
(D) an inorganic hydroxide or hydrated compound.

Furthermore, the present invention relates to an article, in particular a wire or a cable, which comprises the flame retardant polymer composition and to the use of said composition for the production of a flame retardant layer.

## Description

The present invention relates to a flame retardant polymer composition, to an article, in particular a wire or a cable, which comprises the flame retardant composition and to the use of the flame retardant composition for the production of a flame retardant layer.

For improving the flame retardancy of polymers, several approaches are known in the art. First, it is known to include compounds containing halides into the polymer. However, these materials have the disadvantage that by burning hazardous and corrosives gases like hydrogen halides are deliberated. This is also a disadvantage of flame retardant polymer composition based on halide containing polymers, e.g. PVC and fluorinated ones.

Secondly, flame retardant compositions are known which are based on the inclusion of inorganic hydroxides and/or hydrated compounds into the composition as filler materials. Such compositions are typically containing from 50 to 60 wt.% of the inorganic filler which during burning decomposes endothermically and deliberates inert gases at temperatures in the range of 200 to 600°C. Such inorganic fillers e.g. include Al(OH)₃ and Mg(OH)₂. However, these flame retardant materials suffer from the high costs of the inorganic fillers and the deterioration of the processability and mechanical properties due to the high amount of filler.

In a third approach as disclosed e.g. in EP 0 393 959 or WO 98/12253 a flame retardant polymer composition comprises a silicon-group containing compound, an inorganic filler which is neither a hydroxide nor a substantially hydrated compound and an organic polymer matrix typically comprising an acrylate or acetate. The flame retardancy of such compositions is based on synergistic effects between these three components which in case of burning lead to the formation of a physically and firmly stable char layer that protects the polymer from further burning. Compounds based on such compositions show good flame retardancy in the limiting oxygen index (LOI) test method according to ISO 4589-A-IV. Sheathed cables and larger conduit (unsheathed) cables also fulfil specific cable test, like e.g. the single-wire burning test according to IEC 332-1. Conduit wires are, however, most commonly small and wires smaller than 4 mm² based on such compositions have difficulties in fulfilling IEC 332-1. Hence, the flame retardancy of such compositions can still be improved.

It is therefore an object of the present invention to provide a flame retardant polymer composition comprising an organic polymer matrix, optionally a silicone-group containing compound, and an inorganic non-hydrated or non-hydroxide filler material with improved flame retardancy.

The present invention is based on the finding that this object can be achieved by compositions which, in addition to an organic polymer matrix, optionally a silicone group containing compound and an non-hydrated and/or non-hydroxide inorganic filler comprise an inorganic hydroxide or hydrated compound.

The present invention therefore provides a flame retardant polymer composition which is free of halogen compounds, which comprises
(A) an organic polymer matrix,
(B) optionally a silicone-group containing compound,
(C) an inorganic filler material which is neither a hydroxide nor a hydrated compound, and
(D) an inorganic hydroxide or hydrated compound.

The inventive compositions show improved flame retardancy compared to the prior art materials as they both show good test results in the LOI test method and in addition pass the single-wire burning test. Furthermore, these compositions on decomposition do not deliberate any hazardous or corrosive gases.

In the inventive compositions, component (D) is not only having no detrimental influence on the synergistic effects between components (A) to (C), but by the presence of component (A) new synergistic effects between all components (A) to (D) are caused which e.g. result in improvements of the flame retardancy as determined by the single-wire burning test.

The LOI test method is performed according to ISO 4589-A-IV. To determine the LOI value a test specimen of the compound to be evaluated is ignited in an atmosphere of a mixture of nitrogen and oxygen. A content of oxygen in the N₂-O₂ mixture is gradually decreased until the specimen stops burning. The percentage of O₂ in that N₂-O₂ mixture constitutes the compounds LOI value.

A high LOI value means that a high percentage of oxygen is needed to sustain combustion, i.e. the compound has a good flame resistance. The LOI value for a flame retardant composition should be at least 22 and higher values are desirable.

The purpose of the test method IEC 332-1 is to determine the resistance to flame propagation for signal vertical cables. The cable (600 mm) is installed in a vertical position and a 1kW flame produced by a propane burner is applied onto the cable sample at a 45° angle 475 mm from the upper support of the cable. The distance between the lower and upper support should be 550 mm. For cables having an outer diameter of less than 25 mm the flame is applied for 60 seconds. In order to fulfil the test the flame should extinguish after the flame has been taken away and no charring should be visible within 50 mm from the upper support and below 540 mm.

In a preferred embodiment of the present invention component (B), i.e. the silicone-group containing component, mandatorily is present in the flame retardant polymer composition.

In a further preferred embodiment of the inventive composition, components (C) and (D) together are present in an amount of 30 wt. % or more, further preferred in an amount of 40 wt. % or more and most preferred in an amount of 45 wt. % or more of the total composition.

Further preferred, components (C) and (D) together are present in an amount of 80 wt. % or less, further preferred of 70 wt. % or less, and most preferred of 65 wt. % or less of the total composition.

It is further preferred that the weight ratio of components (C):(D) is from 30:70 to 80:20, further preferred from 40:60 to 60:40, and most preferred from 45:55 to 55:45. In a particularly preferred embodiment, the components (C) and (D) are present in the same amount.

Component (D) of the inventive composition is an inorganic hydroxide or hydrated compound. Component (D) may also comprise a mixtures of any of such compounds.

In a preferred embodiment of the inventive composition, component (D) is a metal hydroxide, more preferred a hydroxide of a metal of group 2 of the periodic system of the elements and/or Al, and still more preferred is magnesium hydroxide.

The numbering of chemical groups, as used herein, is in accordance with the IUPAC system in which the groups of the periodic system of the elements are numbered from 1 to 18.

Component (D) may be used in an uncoated or in a coated form, such as e.g. magnesium hydroxide coated with magnesium stearate.

Component (C), i.e. the inorganic filler material suitable for use in the inventive flame retardant polymer composition, comprises all filler materials as known in the art which are neither a hydroxide nor a substantially hydrated compound. Component (C) may also comprise a mixture of any such filler materials.

In a preferred embodiment of the inventive composition, component (C) is an inorganic carbonate, more preferred a carbonate of a metal of group 2 of the periodic system of the elements, aluminium and/or zinc, and still more preferred is calcium carbonate or magnesium carbonate. Also in these preferred embodiments concerning component (C), mixtures of any of the preferred materials mentioned, may be used. Furthermore, also polynary compounds, such as e.g. huntite (Mg₃Ca(CO₃)₄) may be used.

Particularly preferred, component (C) of the inventive flame retardant polymer composition comprises 50 wt.% or more of calcium carbonate and further preferred is substantially made up completely of calcium carbonate.

The inorganic filler may comprise a filler which has been surface-treated with an organosilane, a polymer, a carboxylic acid or salt etc. to aid processing and provide better dispersion of the filler in the organic polymer. Such coatings usually do not make up more than 3 wt.% of the filler.

Preferably, the compositions according to the present invention contain less than 3 wt.% of organo-metallic salt or polymer coatings.

In a further preferred embodiment of the inventive composition, component (B) is a silicon fluid or a gum, or a copolymer of ethylene and at least one other comonomer including a vinyl unsaturated polybishydrocarbylsiloxane, or a mixture of these compounds.

Silicon fluids and gums suitable for use in the present inventions are known and include for example organopolysiloxane polymers comprising chemically combined siloxy units selected from the group consisting of R₃SiO_{0.5}, R₂SiO, R¹SiO_{1.5}, R¹R₂SiO_{0.5}, RR¹SiO, R¹₂SiO, RSiO_{1.5} and SiO₂ units and mixtures thereof in which each R represents independently a saturated or unsaturated monovalent hydrocarbon radical and each R¹ represents a radical such as R or a radical selected from the group consisting of hydrogen, hydroxyl, alkoxy, aryl, vinyl or allyl radicals.

The organopolysiloxane preferably has a viscosity of approximately 600 to 300 x 10⁵ centipoise at 25°C.

The silicone fluid or gum can contain fumed silica fillers of the type commonly used to stiffen silicone rubbers, e.g. up to 50% by weight.

As mentioned above, component (B) may also comprise a copolymer of ethylene and at least one other comonomer including a vinyl unsaturated polybishydrocarbylsiloxane according to formula (I): 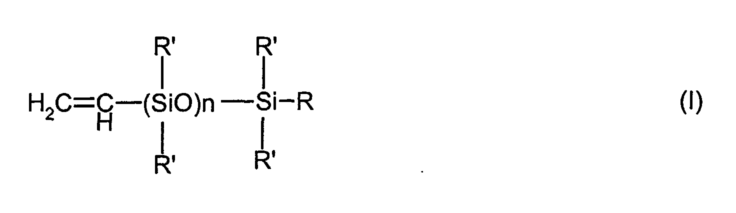 wherein n = 1 to 1000 and

R and R' independently are vinyl, alkyl branched or unbranched, with 1 to 10 carbon atoms; aryl with 6 or 10 carbon atoms; alkyl aryl with 7 to 10 carbon atoms; or aryl alkyl with 7 to 10 carbon atoms.

Such compounds e.g. are disclosed in WO 98/12253 the contents of which is herein enclosed by reference.

It is preferred that component (B) is present in an amount of 0 to 70 %, more preferred 1 to 10 % and still more preferred 1 to 5 % by weight of the total composition.

Preferably, component (B) is polydimethylsiloxane and/or a copolymer of ethylene and vinyl polydimethylsiloxane. These components (B) are preferred due to commercial availability.

The term "copolymer" as used herein is meant to include copolymers produced by copolymerization or by grafting of monomers onto a polymer backbone.

In a further preferred embodiment of the inventive composition, the amount of component (B) is from 0.5 to 100 parts by weight (pbw), more preferably 2 to 45 pbw, and still more preferred 3 to 25 pbw, per 100 pbw of component (A).

Suitable polymers for forming component (A) include polyolefins, polyesters, polyethers and polyurethanes. Elastomeric polymers may also be used such as, for example, ethylene/propylene rubber (EPR), ethylene/propylene-diene monomer rubbers (EPDN), thermoplastic elastomer rubber (TPE) and acrylonitrile butadiene rubber (NBR). Silane-crosslinkable polymers may also be used, i.e. polymers prepared using unsaturated silane monomers having hydrolisable groups capable of crosslinking by hydrolysis and condensation to form silanol groups in the presence of water and, optionally, a silanol condensation catalyst.

In a preferred embodiment component (A) is essentially formed by olefin homo- or copolymers. These are, for example, homopolymers or copolymers of ethylene, propylene and butene and polymers of butadiene or iso isoprene. Suitable homopolymers and copolymers of ethylene include low density polyethylene, linear low, medium or high density polyethylene and very low density polyethylene.

In a further preferred embodiment of the inventive composition component (A) comprises a polar polymer.

Further preferred, this polar polymer is an olefin/acrylate and/or olefin/acetate copolymer.

It is further preferred that the polar polymer comprises a copolymer of ethylene with one or more comonomers selected from C₁- to C₆-alkyl acrylates, C₁- to C₆-alkyl metacrylates, acrylic acids, metacrylic acids and vinyl acetate. The copolymer may also contain ionomeric structures (like in e.g. DuPont's Surlyn types).

Particularly preferred, the polar polymer comprises a copolymer of ethylene with C₁ - C₄-alkyl acrylates or vinylacetate.

In addition to ethylene and the defined comonomers, the copolymers can also contain additional monomers.

It is further preferred that the polar polymer makes up an amount of 30 parts by weight (pbw) or more, more preferred of 50 pbw or more, and still more preferred of 70 pbw or more, per 100 pbw of component (A).

In a further preferred embodiment, the inventive composition further comprises a metal oxide (component (E)). Component (E) is of different chemical nature than component (C).

It has been found that by addition of such a metal oxide the flame retardant properties of the inventive composition as e.g. expressed by the LOI value can further be improved.

As component (E), also mixtures of metal oxides may be used.

Preferably, component (E) is selected from the oxides of the metals of group 2 to 15, more preferably of groups 2 to 13 of the periodic system of the elements.

It is further preferred that component (E) is selected from the group of Al₂O₃, Fe₂O₃ and/or TiO₂, and still more preferably is TiO₂.

Preferably, component (E) is present in the inventive flame retardant polymer composition in an amount of 10 wt% or less, more preferred of 5 wt% or less, and still more preferred of 3 wt% or less with respect to the total weight of the polymer composition.

The inventive composition preferably may also comprise a metal stearate, preferably magnesium stearate. Further preferred, a stearate is added to the composition in a small amount, preferably of 5 wt. % or less, more preferably of 2 wt. % or less.

In addition to the above described components, the inventive compositions may also contain additional conventional polymer ingredients such as, for example, antioxidants or UV stabilizers in small amounts.

The flame retardant polymer composition according to the invention may be prepared by mixing together the components by using any suitable means such as conventional compounding or blending apparatus, e.g. a Bunbury Mixer, a 2-roll rubber mill or a twin screw extruder, Buss co-kneader, etc..

Generally, the composition will be prepared by blending the components together at a temperature which is sufficiently high to soften and plasticise the organic polymer, typically at a temperature in the range of 120 to 200 °C.

The flame retardant compositions according to the present invention can be used in many and diverse applications and products. The compositions can for example be moulded, extruded or otherwise formed into mouldings, sheets and fibers.

As already mentioned, a particularly preferred use of the flame retardant compositions is for the manufacture of wire and cables. The compositions can be extruded about a wire or a cable to form an insulating or jacketing layer or can be used as bedding compounds.

In the following the present invention is further illustrated by means of examples.

### Examples

### 1. Compounding of compositions

Flame retardant polymer compositions according to the invention and for comparative purpose were produced by mixing together the components in a Brabender kneader (287 cm³) at a temperature of 140°C. The "Screw" speed was 60 rpm. When material was added the speed was lowered to 5 rpm to prevent material loss and dust. When mixed for approximately one minute the speed was increased up to 60 rpm again.

### 2. Produced compositions

The compositions according to the invention were produced by mixing an organic polymer, a carbonate, Mg-hydroxide, a stabilizer and optionally a silicone-group containing compound, and/or Mg-stearate and/or metal oxide (TiO₂), as indicated in Table 1.

The comparative compositions contained the components as indicated for the inventive compositions with the exception that either only a carbonate or only Mg-hydroxide was used as inorganic material (see also Table 1).

### 3. Determination of LOI (limited oxygen index)

LOI was determined using a Stanton Redcroft FTA Flammability Unit by the US standard ASTM D 2863-77 and the ISO 4589. The OI results are based on approximately 10 test specimens of dimension "150 x 6 mm". These are stamped out from a 3 mm thick plate pressed in a Collins press. (low pressure (20 bar) at 150°C during one minute followed by high pressure (200 bar) during five minutes at the same temperature). Cooling rate was 10°C/minute under high pressure. The compound was immediately taken from the Brabender kneader to the press.

LOI is a measure of the minimum oxygen concentration of an O₂/N₂ mixture required to sustain combustion for a minimum of 3 minutes or not propagate more than 5 cm from the top of the test specimen. LOI is a measure of ease of extinction.

### 4. Production of cables

0.7 +/- 0.1 mm insulation of the different compounds outlined in table 1 was extruded onto 1.5 mm² copper conductor on a laboratory extrusion line (160-170-180°C, rpm, pressure die).

### 5. Single wire burning test

The test was done in full accordance with IEC 332-1. In order to fulfil the test the flame should extinguish after the flame from the 1 kW propane burner has been taken away and no charring should be visible within 50 mm from the upper support and below 540 mm. A wire fulfilling this criteria is marked "passed" in table 1.

### 6. Materials

EVA 19 = Ethylenevinylacetate copolymer containing 19% vinylacetate and having a melt flow rate at 190°C, 2.16 kg (MFR₂) of 0.65 g/10min.
EVA 18 = Ethylenevinylacetate copolymer containing 18% vinylacetate and having a melt flow rate at 190°C, 2.16 kg (MFR₂) of 0.6 g/10 min.
EVA 20 = Ethylenevinylacetate copolymer containing 20% vinylacetate and having a melt flow rate at 190°C, 2.16 kg (MFR₂) of 20 g/10 min.
EBA 17 = Ethylenebutylacrylate copolymer containing 17% butylacrylate and having a melt flow rate at 190°C, 2.16 kg (MFR₂) of 1.2 g/10min.
HDPE/EVA18 = A polymer blend consisting of 20 % high-density polyethylene and 80 % EVA 18.
Silicone (pure) = Polydimethysilicone elastomer having a plasticity 150 (1/10mm).
Silicone (m.b.) = Masterbatch consisting of 40% Silicone (pure) and 60% low-density polyethylene.
Ca-carbonate = Stearic acid (1%) coated calcium carbonate having an average particle size of 1.5 microns.
Mg-carbonate = Magnesium carbonate having an average particle size of 2.5 microns.
Mg-hydroxide (precipitated) = Surface coated (amount of the organic coating additive is 2%) magnesium hydroxide having an average particle size of 0.6-1 micron.
Mg-hydroxide (grained) = Stearic acid (1%) coated magnesium hydroxide having an average particle size of 2.5 microns.
Mg-stearate = Magnesium stearate.
Stabiliser = Combination of phenolic antioxidants.
TiO₂ = Titanium dioxide having an average particle size of 3 µm.

### 7. Results

The following conclusions can be made from table 1:

Comparative examples No. 1 and 9 show that it is not possible to pass single wire burning tests on the test object at a carbonate content below 58% and a magnesium hydroxide content below 48,5 % when combined with a silicone gum.

Combinations between carbonates and hydroxides show better flame retardant properties. Compound No. 8 shows for example that a total filler load of 48 % is enough to pass IEC 332-1 when a combination of carbonate/hydroxide and silicone gum is used. Compound No. 18 shows that a combination of hydroxide and carbonate not having any silicone gum pass IEC 332-1 at a filler load of 58. Keeping the filler load as low as possible is essential in order to achieve good processing and mechanical properties as well as low water absorption.

Component No. 19 shows that the properties of the inventive composition, e.g. LOI, can further be improved by addition of metal oxide.

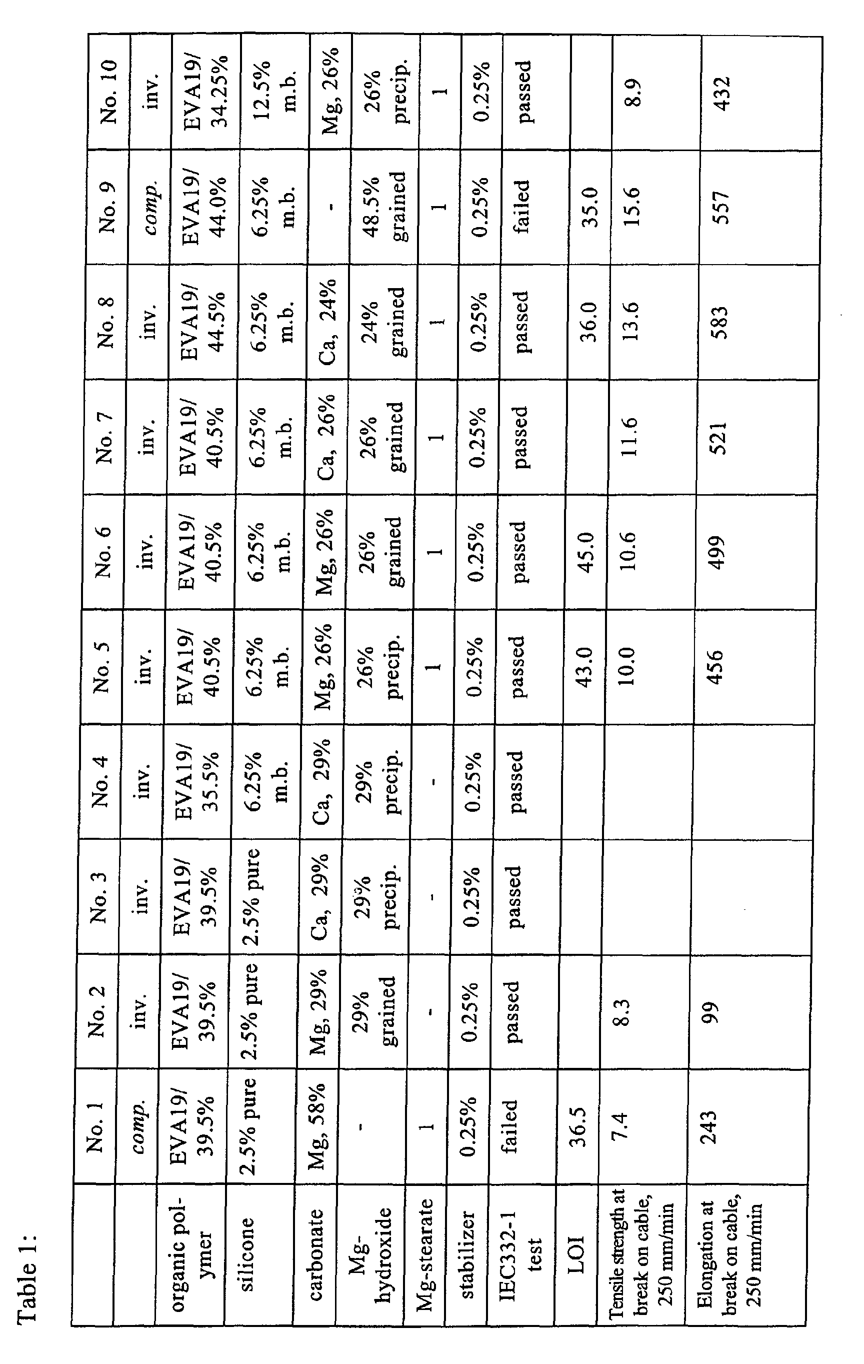

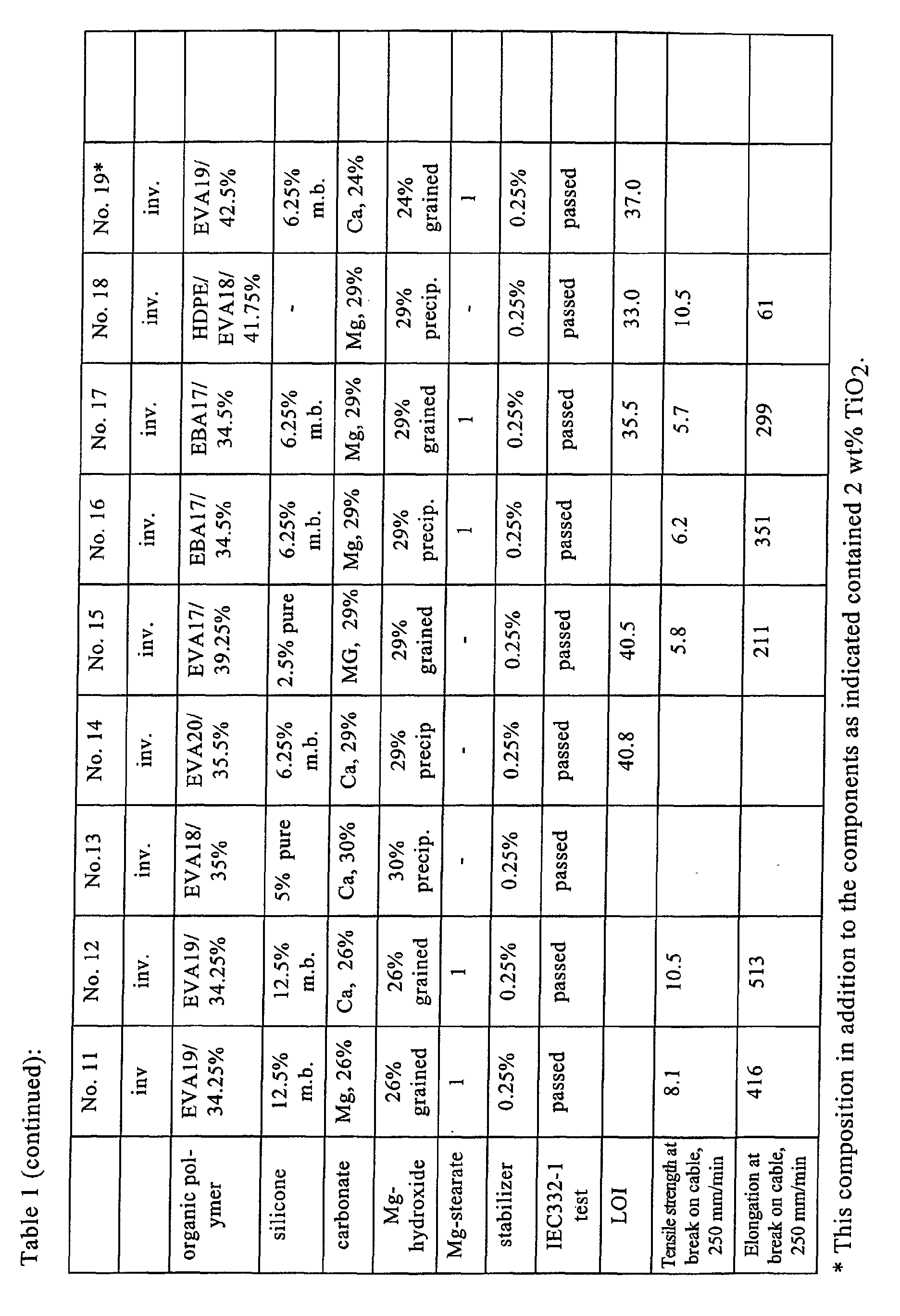

## Claims

1. A flame retardant polymer composition which is free of halogen compounds, comprising
(A) an organic polymer matrix,
(B) optionally a silicone-group containing compound,
(C) an inorganic filler material which is neither a hydroxide nor a hydrated compound, and
(D) an inorganic hydroxide or hydrated compound.

2. A flame retardant polymer composition according to claim 1, wherein component (B) mandatorily is present in the composition.

3. A flame retardant polymer composition according to claims 1 or 2, wherein components (C) and (D) together make up 30 wt% or more, further preferred 40 wt.% or more and still further preferred 45 wt.% or more of the total weight of the composition.

4. A flame retardant polymer composition according to any of the preceding claims, wherein components (C) and (D) together make up 85 wt% or less, further preferred 70 wt.% or less and still further preferred 65 wt.% or less of the total weight of the composition.

5. A flame retardant polymer composition according any of the preceding claims wherein the weight ratio between component (C) and component (D) is from 80:20 to 30:70, more preferred from 40:60 to 60:40 and still more preferred from 45:55 to 55:45.

6. A flame retardant polymer composition according to any of the preceding claims wherein component (D) is a metal hydroxide, more preferred is a hydroxide of a metal of group 2 of the periodic system of the elements and still more preferred is magnesium hydroxide.

7. A flame retardant polymer composition according to any of the preceding claims wherein component (C) is an inorganic carbonate, further preferred a carbonate of a metal of group 2 of the periodic system of the elements, aluminium and/or zinc, still further preferred is calcium carbonate and/or magnesium carbonate and most preferred is calcium carbonate.

8. A flame retardant polymer composition according to any of the preceding claims wherein component (B) is a silicone fluid or gum and/or a copolymer of ethylene and at least one other comonomer including a vinyl unsaturated poly-bis-hydrocarbyl-siloxane.

9. A flame retardant polymer composition according to claim 8 wherein wherein component (B) comprises polydimethylsiloxane and/or a copolymer of ethylene and vinyl-polymethylsiloxane.

10. A flame retardant polymer composition according to any of the preceding claims wherein component (B) is present in an amount of 0 to 70 wt.%, more preferred of 1 to 10 wt.% and still more preferred of 1 to 5 wt.% of the total weight of the composition.

11. A flame retardant polymer composition according to any of the preceding claims wherein the amount of component (B) is from 0.5 to 100 parts, more preferably 2 to 45 pbw, per 100 pbw of component (A).

12. A flame retardant polymer composition according to any of the preceding claims wherein component (A) is essentially formed by olefin homo- or copolymers.

13. A flame retardant polymer composition according to any of the preceding claims wherein component (A) comprises a polar polymer.

14. A flame retardant polymer composition according to claim 12 wherein the polar polymer comprises an olefin/acrylate and/or acetate copolymer.

15. A flame retardant polymer composition according to claim 13 wherein the polar polymer comprises a copolymer of ethylene with one or more comonomers selected from C₁- to C₆-alkylacrylates, C₁- to C₆-alkylmethacrylates, acrylic acid, methacrylic acid and vinylacetate including ionomers thereof.

16. A flame retardant polymer composition according to claim 14 wherein the polar polymer comprises a copolymer of ethylene with C₁- to C₄-acrylates.

17. A flame retardant polymer composition according to claims 12 to 15 wherein the polar polymer makes up an amount of 50 pbw or more, more preferred of 100 pbw or more and still more preferred of 200 pbw or more per 100 of the total weight of component (A).

18. A flame retardant polymer composition according to any of the preceding claims further comprising (E) a metal oxide.

19. A flame retardant polymer composition according to claim 16 wherein component (E) is selected from the oxides of the metals of groups 2 to 15, more preferably of groups 2 to 13 of the periodic system of the elements, still more preferably is selected from the group of Al₂O₃, Fe₂O₃ and/or TiO₂ and most preferably is TiO₂.

20. A flame retardant polymer composition according to any of the preceding claims wherein component (E) is present in an amount of 10 wt% or less, more preferably of 5 wt% or less and still more preferred of 3 wt% or less of the total weight of the composition.

21. A flame retardant polymer composition according to any of the preceding claims further comprising a metal stearate, preferably Mg-stearate.

22. An article, in particular a wire or a cable, comprising the flame retardant polymer composition according to any of the preceding claims.

23. Use of a flame retardant polymer composition according to any of claims 1 to 18 for the production of a flame retardant layer, in particular of a wire or a cable.
